# EUROPEAN PATENT SPECIFICATION

(11) **EP 2 752 831 B1**
(45) Date of publication and mention of the grant of the patent: **05.07.2017**
(21) Application number: 13196625.1
(22) Date of filing: 11.12.2013
(51) Int. Cl.: G08C 23/04, G06F 3/0346

(54) **Input device, display device and method of controlling thereof**
Eingabevorrichtung, Anzeigevorrichtung und Steuerverfahren dafür
Dispositif d'entrée, dispositif d'affichage et son procédé de commande

(30) Priority: 08.01.2013 KR 20130002152
(43) Date of publication of application: 09.07.2014
(73) Proprietor: Samsung Electronics Co., Ltd, Gyeonggi-do 443-742 (KR)
(72) Inventor: Choi, Eun-seok, Gyeonggi-do (KR); Choi, Sang-on, Gyeonggi-do (KR)
(74) Representative: Appleyard Lees IP LLP

(56) References cited:
- WO-A2-2005/109215
- US-A1- 2005 212 749
- US-A1- 2009 186 659
- US-A1- 2011 304 539
- US-A1- 2012 250 072

## Description

### BACKGROUND

### Field

Exemplary embodiments relate to an input device, a display device, and a method of controlling thereof. More particularly, exemplary embodiments relate to an input device, a display device, and a method of controlling thereof, which inputs command by using gestures.

### Description of the Related Art

Related art methods for controlling an electronic device in various ways are being developed. One method of the related art is to sense a movement of a user using a motion sensor, and controlling an electronic device according to the movement. This method of the related art is already commercialized. In the method of the related art, the control of a user interface (UI) in the electronic device is executed by moving a cursor over an object of interest (e.g., an icon, a menu button, etc.), pressing an enter button of an input device, and selecting the object.

However, in the related art, when controlling the UI of a display device in an input device which uses an existing motion sensor, the user must always press the enter button after moving the cursor over the object of interest. In the related art, if the user presses another button of the input device, and moves to the enter button, the user may not see the display device for a moment.

In the related art, if the user cannot see the screen for a moment, it may cause user inconvenience to once again find the location of the cursor when controlling, since the location of the cursor on screen may be lost. In addition, in the related art, the cursor may unintentionally be located on another place, when the user turns his or her eyes to the input device, and finds the location of the enter button.

Therefore, there is a need for controlling the UI without turning the user's eyes from the screen.

US2005/0212749 discloses motion sensor engagement for a handheld device.

US2011/0304539 discloses a remote controlling apparatus and method for controlling the same.

### SUMMARY

Exemplary embodiments may overcome the above disadvantages, and other disadvantages not described above. Also, the exemplary embodiments are not required to overcome the disadvantages described above, and an exemplary embodiment may not overcome any of the problems described above.

In view of the foregoing problems, the exemplary embodiments may provide an input device, which executes movement of a cursor and selection operation of a user interface (UI) object according to the movement status, a display device, and controlling methods thereof.

An aspect of an exemplary embodiment may provide an input device which includes a sensor configured to sense a location and a movement of the input device in response to a gesture command being input, a controller configured to convert the sensed movement into a physical quantity, create a cursor movement command when a size of the physical quantity is less than a predetermined threshold value, and create a predetermined control command when the size of the physical quantity is more than the predetermined threshold value, and a communicator configured to transmit the created command to a display device. Characterised in that the controller is configured to create a cursor movement command when a size of the physical quantity is less than a predetermined threshold value.

The input device further comprises an inputter configured to receive a reference determination command, and the controller determines a reference position for a position of the input device at a time of inputting the reference determination command.

The sensor may include at least one of an acceleration sensor, a gyro sensor, and a geomagnetic sensor.

The predetermined threshold value is determined based on a type of an application to be executed.

The controller displays a cursor on a predetermined default region on a changed screen, in response to a screen of the display device being changed according to the predetermined control command.

An aspect of an exemplary embodiment may provide a display device which includes a communicator configured to receive information regarding a location and a movement from an input device, a controller configured to convert a sensed movement into a physical quantity, create a cursor movement command when a size of the physical quantity is less than a predetermined threshold value, and create a predetermined control command when the size of the physical quantity is more than the predetermined threshold value, and an outputter configured to execute an operation corresponding to the created command. Characterised in that the controller is configured to create a cursor movement command when a size of the physical quantity is less than a predetermined threshold value

The communicator receives a reference determination command, and the controller determines the reference position for a position of the input device at a time of inputting the reference determination command, and discriminates a movement of the input device based on the determined reference position.

The predetermined threshold value is determined based on a type of an application to be executed.

The controller displays a cursor on a predetermined default region on a changed screen, in response to a screen of the display device being changed according to the predetermined control command.

An aspect of an exemplary embodiment may provide a method of controlling an input device which includes: sensing a location and a movement of the input device in response to a gesture command being input; converting the sensed movement into a physical quantity, creating a cursor movement command when a size of the physical quantity is less than a predetermined threshold value, and creating a predetermined control command when the size of the physical quantity is more than the predetermined threshold value; and transmitting the created command to a display device. Characterised by creating a cursor movement command when a size of the physical quantity is less than a predetermined threshold value.

The method of controlling the input device further includes receiving a reference determination command, and determining a reference position for a position of the input device at a time of inputting the reference determination command.

The predetermined threshold value is determined based on a type of an application to be executed.

The method of controlling the input device further includes displaying a cursor on a predetermined default region on a changed screen, in response to a screen of the display device being changed according to the predetermined control command. Characterised by creating a cursor movement command when a size of the physical quantity is less than a predetermined threshold value

An aspect of an exemplary embodiment may provide a method of controlling a display device which includes: receiving information regarding a location and a movement from an input device, converting a sensed movement into a physical quantity, creating a cursor movement command when a size of the physical quantity is less than a predetermined threshold value, and creating a predetermined control command when the size of the physical quantity is more than the predetermined threshold value, and executing an operation corresponding to the created command.

The method of controlling the display device further includes: receiving a reference determination command and determining a reference position for a position of the input device at a time of inputting the reference determination command.

The predetermined threshold value is determined based on a type of an application to be executed.

The method of controlling the display device further includes displaying a cursor on a predetermined default region in a changed screen, in response to a screen of the display device being changed according to the predetermined control command.

According to various embodiments of the exemplary embodiments, the user may only move an input device to conveniently move the cursor on the screen of the display device, and select the UI object.

Additional and/or other aspects and advantages of the exemplary embodiments will be set forth in part in the description which follows and, in part, will be obvious from the description, or may be learned by practice of the exemplary embodiments.

An aspect of an exemplary embodiment may provide a method of controlling a display device which includes: displaying a plurality of applications on a screen of the display device; receiving a movement input from an input device; converting the received movement into an angular speed value; creating an application selection command when the angular speed value is greater than a predetermined threshold value; creating a cursor movement command when the angular speed value is less than the predetermined threshould value; and executing an operation corresponding to the created cursor movement command or the created application selection command based on a relationship between the angular speed value and the predetermined threshold value.

### BRIEF DESCRIPTION OF THE DRAWINGS

The above and/or other aspects of the exemplary embodiments will be more apparent by describing certain exemplary embodiments with reference to the accompanying drawings, in which:
Figure 1 is a view showing the configuration of a display system according to a preferred embodiment.
Figure 2 is a block diagram showing the configuration of an input device according to a preferred embodiment.
Figure 3 is a block diagram showing the detailed configuration of an input device according to a preferred embodiment.
Figure 4 is a block diagram showing the configuration of a display device according to a preferred embodiment.
Figure 5 is a block diagram for explaining the formation of signal processing algorithm according to a preferred embodiment.
Figure 6 is a view for explaining an operation of an input device according to a preferred embodiment.
Figure 7 is a view for explaining a recognition operation of object selection according to a preferred embodiment.
Figure 8 is a view for explaining a reference position determination operation of an input device according to a preferred embodiment.
Figure 9 is a view for explaining an application operation according to a preferred embodiment.
Figure 10 is a flow diagram for explaining a control method of an input device according to a preferred embodiment.
Figure 11 is a flow diagram for explaining a control method of a display device according to a preferred embodiment.

### DETAILED DESCRIPTION OF THE EXEMPLARY EMBODIMENTS

Certain exemplary embodiments will now be described in greater detail with reference to the accompanying drawings.

In the following description, same drawing reference numerals are used for the same elements, even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail, since they would obscure the exemplary embodiments with unnecessary detail.

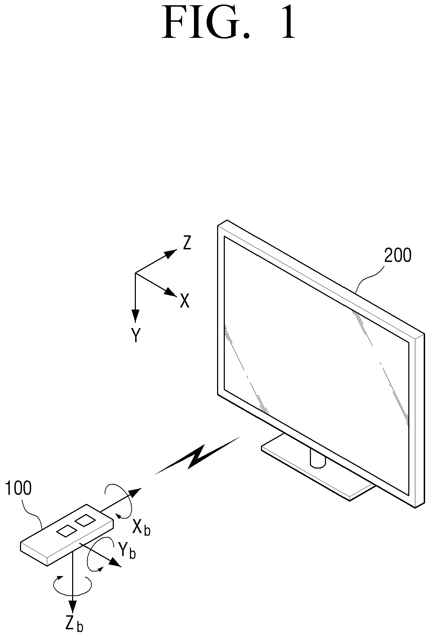

Figure 1 is a view showing the configuration of a display system according to a preferred embodiment.

Referring to Figure 1, a display system according to a preferred embodiment includes an input device 100 and a display device 200.

The input device may be realized as a remote control, mobile phone with remote control function, PDA, tablet PC, MP3P, etc.

The input device is a device for remotely controlling the display device. The input device may and transmit a control signal, corresponding to the inputted user command, to the display device. Alternatively, the input device may sense a movement of the input device in a XYZ space, and transmit a signal to the display device, which corresponds to the sensed three-dimensional space movement. In other words, the three-dimensional space movement may correspond to the command for controlling the display device. The user may transmit a prescribed command to the display device by moving the input device on the space.

In this case, the input device may transmit a signal corresponding to the sensed movement information (hereinafter referred to as motion signal), and also may transmit a signal converted as a control command for controlling display device (hereinafter referred to as control signal) from the signal corresponding to the sensed movement information. In other words, the calculation for the control signal of the sensed movement information may be performed in the input device, or in the display device. If the calculation for the control signal is performed in the input device, the display device may execute a corresponding operation by receiving the control signal from the input device. However, if the calculation for the control signal is performed in the display device, the display device may execute a corresponding operation by receiving a motion signal from the input device. The exemplary embodiments are explained based on the input device executing the calculation for the control signal, and the display device executing the calculation for the control signal.

Meanwhile, the input device may control a user interface (UI) object of the display device based on an absolute coordinate method. In other words, the movement region of the input device may correspond with the screen of the display device. However, in some cases, a relative coordinate method may be applied. Detailed description of the relative coordinate method is omitted. The corresponding relation between the movement of the input device and the screen display of the display device, and the reference position determination of the input device are described below.

The display device may be realized as a digital TV, which may be controlled by the input device. However, if the display device is a device such as a PC, a KIOSK, or a billboard which may be remote-controlled, the input device may not be limited.

Meanwhile, the input device and the display device may execute communication through various communication ways, such as BT (BlueTooth), Zigbee, WI-FI (Wireless Fidelity), IR (Infrared), Serial Interface, USB (Universal Serial Bus). For example, if the input device and the display device execute communication through BT (BlueTooth), the input device and the display device may be interlocked through Bluetooth-pairing. Detailed description related to Bluetooth pairing is omitted.

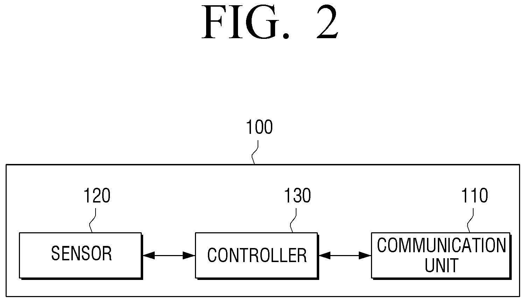

Figure 2 is a block diagram showing the configuration of an input device according to a preferred embodiment.

According to Figure 2, the input device includes a communication unit 110, a sensor 120, and a controller 130.

The communication unit 110 communicates with the display device, and transmits a control signal generated in the input device to the display device. Meanwhile, if the calculation for the control signal is performed in the display device, the motion signal, sensed through the sensor, may be transmitted to the display device. More specifically, the communication unit 110 may execute communication with the display device through various communication ways, such as BT (BlueTooth), Zigbee, WI-FI (Wireless Fidelity), IR (Infrared), Serial Interface, USB (Universal Serial Bus). The communication unit 110 may also include at least one of a processor, a circuit, and a hardware module for executing the communication with the display device.

The sensor 120 senses the location and the movement of the input device. More specifically, the sensor may include at least an acceleration sensor, a gyro sensor, or a geomagnetic sensor. However, the sensor 120 is not limited, and a sensor included in the sensor may sense the location and the movement of the input device through the combination of one or two sensors.

The acceleration sensor 121 is a sensor measuring movement of the input device on space. In other words, the acceleration sensor may sense at least one from a change of acceleration generated when the user moves the input device, and a change of angular acceleration. The acceleration sensor may be realized as a tri-axis acceleration sensor, measuring the increase and the decrease of a straight line speed on the three axes that meet at the right angles. Information on movement acceleration of the input device may be obtained by using the acceleration sensor, and information on inclination may be obtained by using components of acceleration of gravity in static state.

The gyro sensor 122 is an inertial sensor measuring rotating angular speed of the input device. In other words, the gyro sensor is a sensor measuring rotating direction and speed by using inertial force of the object. The gyro sensor may be realized as a tri-axis angular speed sensor, measuring the increase and the decrease of the rotation angle on three axes that meet at the right angles.

The geomagnetic sensor 123 is a sensor measuring an azimuth. In other words, the geomagnetic sensor senses the magnetic field formed toward a north-south direction of the earth, and measures the azimuth. The geomagnetic sensor may be realized as a tri-axis geomagnetic sensor, measuring the intensity and direction of magnetic on three axes that meet at the right angles. The north direction measured by the geomagnetic sensor may be magnetic north. However, although the geomagnetic sensor measures the direction of magnetic north, it may also output a direction of true north through internal calculation.

The controller 130 converts the sensed movement into a physical quantity, creates a cursor movement command when the size of the physical quantity is less than a predetermined threshold value, and creates a predetermined control command when the size of the physical quantity is over the predetermined threshold value. The predetermined threshold value signifies a determined value for recognizing that the operation corresponding to a certain command is executed. The threshold value may be determined individually depending on the types of executing application. For example, the physical quantity signifies an angular speed, speed, acceleration speed, and distance of movement of the input device. The controller 130 detects the physical quantity from the sensed movement of the input device, and creates the corresponding predetermined control command.

More specifically, the controller 130 analyzes the sensor value sensed from the sensor with signal processing algorithm, transmits the control information corresponding to the analyzed gesture to the display device, and controls the screen display state. Alternatively, the controller 130 may transmit the sensor value sensed from the sensor itself to the display device, and the controller 130 may analyze the sensor value received from the display device with a gesture recognition algorithm, and control the screen display and UI object based on the control information corresponding to the analyzed gesture.

In addition, the controller 130 may determine a position of the input device at the time of inputting a reference determination command as a reference position. The controller 130 may display the cursor in a predetermined default region on a changed screen, when the screen of the display device is changed according to the control command. The reference position determination method and the cursor display method, according to the screen change, will be described below.

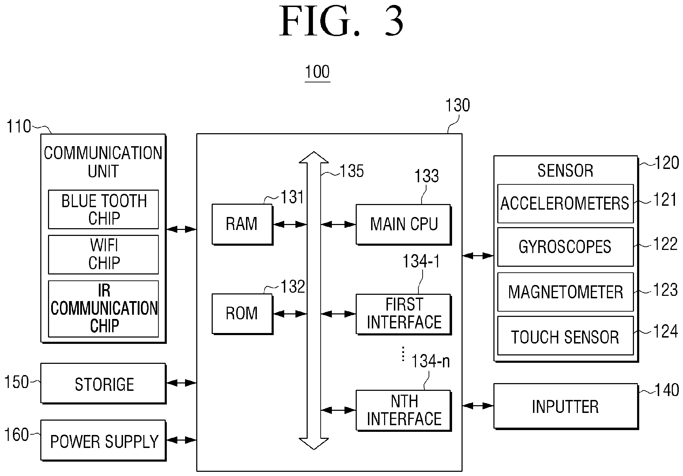

Figure 3 is a block diagram showing the detailed configuration of an input device according to a preferred embodiment.

The communication unit 110 includes hardware which functions by various communication methods, such as Bluetooth chip, Wi-Fi chip, IR communications chip, etc. These chips may be integrated as one chip, or may be used as separate chips (as shown in Figure 3).

A Bluetooth chip, a Wi-Fi chip, and an IR communications chip each execute communication in a Bluetooth, a WiFi, and an IR function. When using a Bluetooth chip or a WiFi chip, all sorts of information may be transceived, and the communication connection may be executed using this information.

Wireless communication may be executed in various ways by using mobile communication network such as 3G, 4G, etc. or using internet network.

The communication unit 110 may use these various chips to execute communication with all sorts of external device, including the display device. More particularly, various control signals or control information described above may be transmitted into the display device.

The sensor 120 is a component for sensing the movement of the input device. The sensor includes various sensors, such as an acceleration sensor 121, a gyro sensor 122, a geomagnetic sensor 123, and a touch sensor 124.

The acceleration sensor 121 is a sensor which measures the acceleration and direction of the acceleration, when movement is created. More particularly, the acceleration sensor 121 outputs a sensing value, corresponding to the movement acceleration of the input device 100 in which the sensor is attached, and a sensing value, corresponding to acceleration of gravity which changes according to the inclination. The controller 130 may discriminate movement acceleration of the input device by using an output value of the acceleration sensor, and the inclination degree by using a component of acceleration of gravity in static state.

The gyro sensor 122 is a sensor which measures the Coriolis force, directing toward the speed direction when rotary motion occurs, and detects the angular speed. The controller 130 may also detect rotation of the input device by using a measurement value of the gyro sensor.

The geomagnetic sensor 123 is a sensor sensing a magnetic force of the earth, or a magnetic force of a surrounding magnetic component object by using a twin-axis or a tri-axis fluxgate. The controller 130 may measure direction and intensity of the magnetic by using the geomagnetic value sensed from the geomagnetic sensor, and output an azimuth. The controller 130 may discriminate to which direction the input device has rotated.

The touch sensor 124 may sense the touch control of a user. The touch sensor may be realized capacitively or resistively. The capacitive touch sensor is a sensor which uses a dielectric laminated on the surface of the input device, and outputs a touch coordinate by sensing micro electricity, which is considered as a human body of the user when the part of the user body touches the surface of the input device. The resistive touch sensor includes two electrode planes built in the input device. When the user touches the sensor, the resistive touch sensor outputs a touch coordinate by sensing electricity, since the upper and the lower planes on a touched position contact with each other. In addition, an infrared sensing method, a surface ultrasonic wave conduction method, an integral tension measure method, and a Piezo effect method may be used to sense the touch control. Detailed description thereof is omitted.

The controller 130 may execute various calculation operations according to all sorts of sensing signals provided from the sensor 120. For example, when the movement of the input device is sensed by the acceleration sensor, the gyro sensor, or the geomagnetic sensor, the corresponding sensing signal is calculated through the signal processing algorithm, and the controller 130 controls the calculated value to be transmitted to the display device.

The inputter 140 is inputted with a user command for an ON/OFF switch and a reference determination command for the reference position determination of the input device. The inputter may be formed as a push type or a touch type in the front, the side, or the rear of the body of the input device.

Meanwhile, the operation of the controller 130 may be performed by the program store in the storage 150. In other words, various data such as an O/S (Operating System) for operating the input device, and a signal processing algorithm for executing a calculation on the sensing signal sensed from the sensor may be stored in the storage. The controller 130 may control the operation of the input device using programs stored in the storage.

Specifically, the controller 130 includes a RAM 131, a ROM 132, a main CPU 133, the first- nth interface 134-1 ∼ 134-n, and a bus 135.

The RAM 131, the ROM 132, the main CPU 133, and the first to nth interface 134-1 ∼ 134-n are connected to each other through the bus 135, and may transceive all sorts of data or signals.

The first to nth interfaces 134-1 ∼ 134-n are also connected to other components not shown in FIG. 3. The first to nth interfaces 134-1 ∼ 134-n enable the main CPU to access.

The main CPU 133 accesses the storage, and executes booting by using the O/S stored in the storage. In addition, the main CPU 133 executes various operations by using the programs and data stored in the storage.

Specifically, a set of commands for system booting is stored in the ROM 132. If the power is supplied due to the input of a turn-on command, the main CPU 133 copies O/S stored in the storage according to the command stored in the ROM 132, executes the O/S, and boots the system. When the booting is completed, the main CPU copies all sorts of programs stored in the storage to the RAM 131, operates the copied program, and executes all sorts of operations.

A power unit 160 supplies the electric power, which is used in the input device. The power unit 160 may be realized as chargeable battery, and may further include a voltage converter, which converts external supply power, and provides the converted external supply power to the chargeable battery.

The power unit 160 may supply the electric power to the input device in various modes, such as normal mode, sleep mode, and standby mode, etc., according to the power management control of the controller 130.

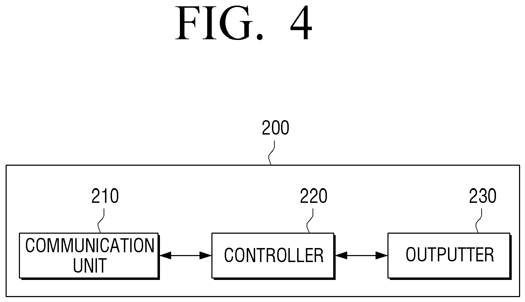

Figure 4 is a block diagram showing the configuration of a display device according to a preferred embodiment.

According to Figure 4, a display device 200 includes a communication unit 210, a controller 220, and an outputter 230. The display device 200 may be realized as a digital TV, a PC, a laptop, etc. However, the display device 200 is not limited, and may be applied if the display device 200 includes a displaying function, and is remote control-enabled.

The communication unit 210 may execute communication with the input device. Specifically, the communication unit 210 may execute communication with the input device through various communication methods, such as BT (BlueTooth), Zigbee, WI-FI (Wireless Fidelity), IR (Infrared), Serial Interface, USB (Universal Serial Bus). The communication unit 210 may also include at least one of a processor, a circuit, or a hardware module for executing the communication with the input device.

Specifically, the communication unit receives information of the location and the movement of the input device from the input device. In other words, a motion signal corresponding to an inputted user command may be received. The user command may be a gesture input, but also includes methods such as a button input and a voice input.

For example, the motion signal corresponding to the gesture command sensed through the input device may be received. However, the control signal may also be received according to the calculation processing ability of the input device.

In addition, the communication unit 210 may transmit information to the input device. For example, if the power of the display device is off, the power of the input device may automatically be off by transmitting the power off signal to the input device. In addition, the cursor display coordinate information of the display device or the cursor display coordinate information, which is changed according to the executed application, may be transmitted to the input device.

The controller 220 controls the operation of the display device. The controller 220 converts the information on a received movement into a physical quantity, and creates the cursor movement command, if a size of the physical quantity is less than a predetermined threshold value. If the size of the physical quantity is over the predetermined threshold value, the predetermined control command is created. The predetermined threshold value signifies the determination value for recognizing that the operation corresponding to the certain command is executed. The predetermined threshold value is individually determined depending on the type of executing applications.

The controller 220 converts the motion signal received from the input device into the control signal for controlling the display device, and may control the display device according to the converted control signal. Specifically, the controller 220 converts the received motion signal into the control information formation, which is applied to the function of the display device, by using the control signal mapping table, and may control the function of the display device by using the converted control signal. However, in some cases, the signal of converted control information formation may be received from the input device. The converted operation may be omitted in this case.

In addition, the controller 220 may determine a position of the input device at the time of inputting a reference determination command as a reference position when the reference determination command is inputted. The controller 220 may display the cursor in a predetermined default region on a changed screen, when the screen of the display device is changed according to the control command. The method of a reference position determination and the method of cursor display according to the changed screen will be described below.

The outputter 230 executes an operation corresponding to the control command received from the input device, or the control command created from the controller 220. For example, when the video contents play command is inputted, the display device displays the video on the screen, and outputs the sound through the speaker.

The screen of the display device may be realized in various displays, such as a liquid crystal display, a thin film transistor-liquid crystal display, an organic light-emitting diode, a flexible display, a 3D display, etc..

As described above, the controller 220 may execute various operations by operating the program stored in the storage (not illustrated).

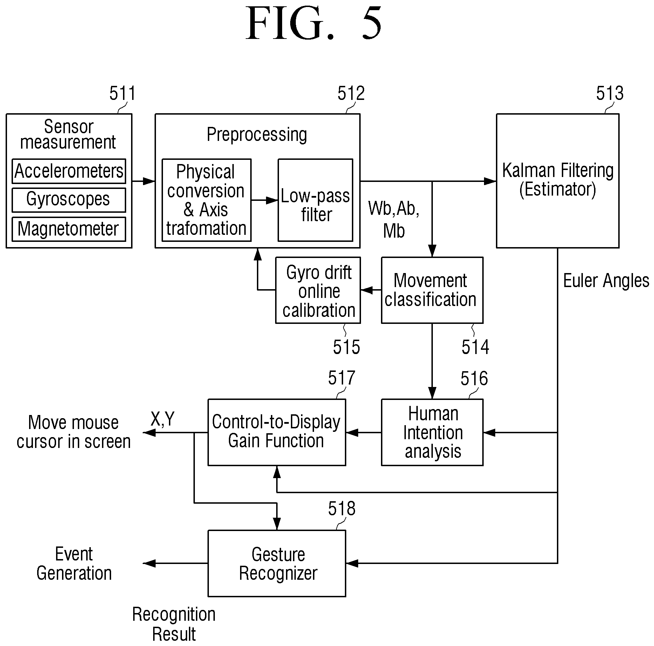

Figure 5 is a block diagram for explaining a formation of a signal processing algorithm according to a preferred embodiment.

As illustrated in FIG. 5, the signal processing algorithm may include a block 511 receiving sensor measurement value, a preprocessing execution block 512, a pose estimation block 513, a movement distinguishment block 514, a calibration execution block 515, a user intention analysis block 516, a gain function application block 517, and a gesture recognition block 518. The signal processing algorithm illustrated in Figure 5 may be executed in a CPU or a MCU.

Block 511 receives various sensor values sensed from the sensor. For example, block 511 may receive the sensed sensor value through at least one among the acceleration sensor, the gyro sensor, and the geomagnetic sensor.

Block 512 executes the preprocessing on a received sensor value, and specifically executes the physical quantity convert on the sensor value, the sensor axis convert function, and the low pass filtering function.

For example, the sensor value converted into the digital value is converted to a real physical quantity that is applicable to the signal processing algorithm (e.g., physical quantity conversion). In addition, the block 512 may execute an operation of setting individual axis of acceleration, angular speed, and geomagnetic sensor as one defined axis (e.g., sensor axis conversion).Additionally, the electric noise of the sensor and unintentional high frequency movement may be removed through low pass filtering (e.g., low power filtering).

Block 513 estimates a pose or a eular angle (Roll, Pitch, Yaw (heading)) from each sensor value. The estimation method by Kalman Filter may be applied in this case.

Block 514 is a block distinguishing the movement state by using the sensor signal, and may discriminate whether the input device is moving, or whether the input device is moving slowly or fast.

Block 515 progresses the calibration operation. If it is discriminated that the input device is not moving in block 514, i.e., if it is discriminated as Zero-Rate, offset value of angular sensor may be compensated after calculating the average output value of the angular sensor, and the average value may be subtracted from the output sensor of the angular sensor.

Block 516 analyzes whether the user is moving or stopping the input device, or whether the user is clicking something, and executes the classification.

Block 517 converts each Yaw angle and Pitch angle that is outputted from block 513 into an X and a Y coordinate of the display device. The location of the mouse cursor may be designated by using the converted coordinate.

Block 518 may execute gesture recognition on a designated gesture by using the signal outputted from block 512.

The coordinate of the pointer may be designated by mapping the X and Y coordinates outputted from block 7 with the X and Y coordinates of the pointer on UI screen of the display device.

In addition, a corresponding operation may be executed by causing a predetermined event on the UI screen using Euler angles (Roll, Pitch, and Yaw) outputted from block 518 or X and Y coordinates outputted from block 517.

Meanwhile, the calculation operation, in accordance with the signal processing algorithm, may be processed in the controller 130 of the input device or the controller 220 of the display device.

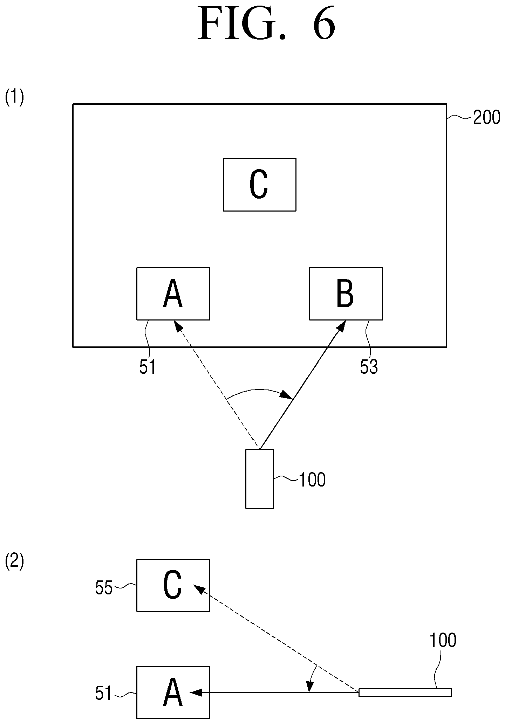

Figure 6 is a view for explaining an operation of an input device according to a preferred embodiment.

Referring to (1) in Figure 6, the screen of the display device 200 displays three UI objects, i.e., A, B, and C. For example, the UI object may be an icon, an image, or an application etc. In (1) of Figure 6, UI objects of A 51 and B 53 are displayed in the bottom of the screen, and the UI object of C is displayed at the top. The user may move the input device side to side. In other words, since the input device 100 moves in the Z axis, Yaw angles change. If the change rate of Yaw angle is less than the predetermined threshold value, the movement of the input device is recognized as the cursor movement command. Therefore, the on screen cursor may correspond to the movement of the input device and move from A to B.

Referring to (2) in Figure 6, the input device moves from A 51 to C 55. In other words, Pitch angle changes since the input device moves on the Y axis. If the change rate of Pitch angle is less than the predetermined threshold value, the movement of the input device is recognized as the cursor movement command. Therefore, the on screen cursor may correspond to the movement of the input device and move from A to C.

Similarly, the angular speed may be detected according to the movement of the input device. If the angular speed is less than the threshold value, the movement of the input device may be recognized as the cursor movement command. Alternatively, if the size of the angular speed corresponding to the movement of the input device is over the threshold value, the movement of the input device is recognized as a specified command, and the display device may execute the corresponding command.

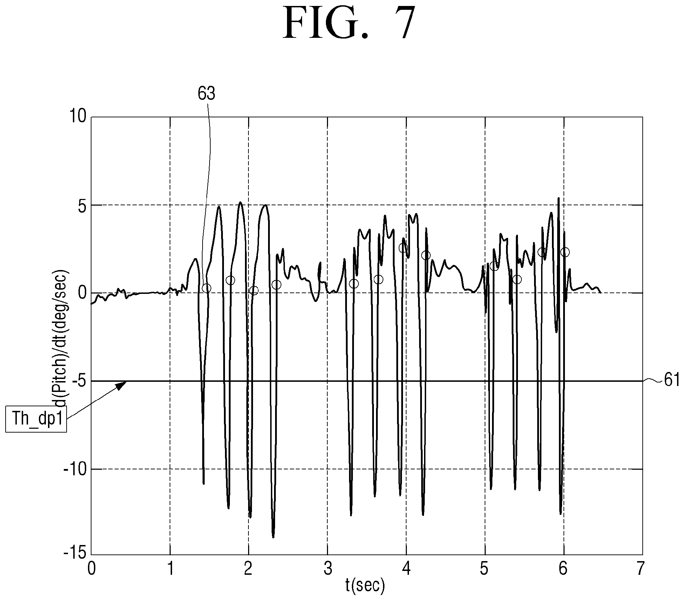

Figure 7 is a view for explaining a recognition operation of an object selection according to a preferred embodiment.

Referring to Figure 7, a graph is illustrated representing the size of the angular speed corresponding to up and down movement of the input device. In other words, Figure 7 represents the angular speed on a Pitch angle of the input device. For example, the input device or the display device may determine the operation of moving the input device up and down over the predetermined angular speed, as an icon selection command. The operation of the input device, in which the change of Pitch angular speed is less than -5 deg/s 61, may be determined to be recognized as an icon selection command. In other words, -5 deg/s, the size of Pitch angular speed, represents a threshold value which is recognized as the icon selection command. The threshold value may be different, depending on a type of an executing program or application. Alternatively, the threshold value may be determined, so that a different command is executed, according to each threshold value by determining more than two threshold values.

In Figure 7, the Pitch angular speed of the input device rarely changes in one second. In this case, the movement of the input device corresponds to the cursor movement command. The change of Pitch angular speed getting less than -5 deg/s and getting more than -5 deg/s between one to two seconds occurs three times.. In other words, the input device has moved downward, and then moved upward. If the input device moves upward and downward fast, the change of the angular speed would appear to be in the form of getting more than -5 deg/s, and then getting less than -5 deg/s.

Similarly, the size of the angular speed corresponding to a side to side movement of the input device may be represented. For example, assume that the left side is + direction, and when moving the input device to a left side and to a right side fast, the change of the Yaw angular speed may appear in the form of getting more than +5 deg/s, and then getting less than +5 deg/s. When moving the input device to the right side and to the left side fast, the change of the Yaw angular speed may appear in the form of getting less than +5 deg/s, and then getting more than +5 deg/s.

The display of a circular form 63 illustrated in Figure 7 represents the time of the event when a control command is created, after a real command is recognized. For example, the input device or the display device may create an icon selection command at the time of executing an operation of moving the input device downward and upward. By determining the time when a control command is created, a plurality of commands may be created with one operation, or the malfunction probability may be lowered. The time when the control command is created may be properly determined, depending on the performance of the electronic device or the type of application.

The user may determine the reference position on the input device before executing the input operation.

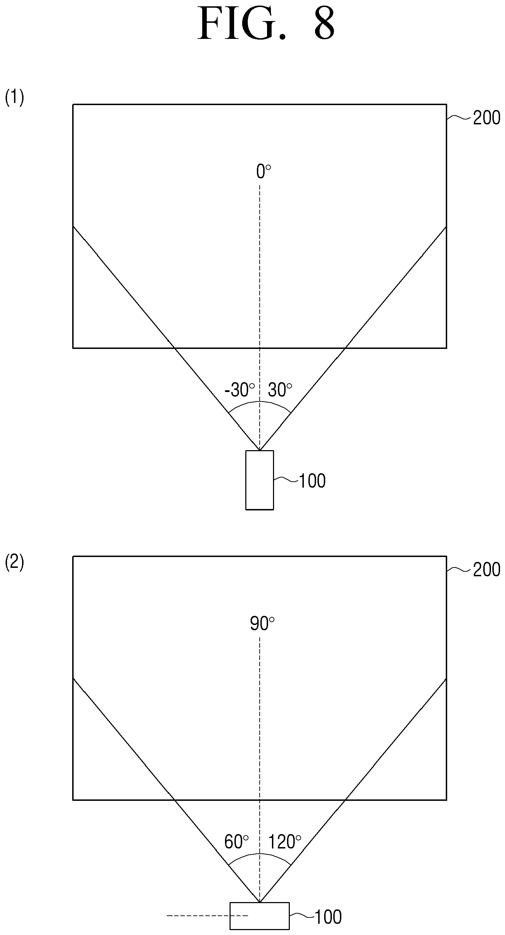

Figure 8 is a view for explaining a reference position determination operation of an input device according to a preferred embodiment.

Referring to (1) in Figure 8, the major axis direction of the input device is located in a vertical direction from the screen of the display device. For example, the direction of the input device may be determined as 0 degree, and 30 degrees to the left and to the right of the input device may be determined as the maximum display region of the display device. In other words, the angle between - 30 degrees and 30 degrees may be the angle where the cursor is displayed on the display device.

The angle is a preferred embodiment, and the location and the angle of the input device may be variously determined, depending on the performance and the size of the input device and the display device.

The inputter 140 is inputted with the user command for power ON/OFF, or a reference determined command for the reference position determination of the input device. The inputter 140 may be formed as a push-type or as touch-type, in the front, side, or rear of the body of the input device.

The controller 130, 220 may determine the location of the input device at the time of inputting a reference determined command as the reference position, when a reference determined command is inputted. As described above, the input device may execute a calculation operation by using the detected motion signal, and create the control signal and transmit the signal to the display device. Alternatively, the input device may detect the motion signal, transmit the signal to the display device, and the display device may create the control signal through a calculation process using the transmitted motion signal.

The cursor may be displayed in the middle of the screen of the display device, when the location at the time of inputting the reference determined command of the input device is determined as the reference position. The display device displays the cursor by corresponding to the movement of the input device, in comparison with a determined reference position. For example, if the input device moves 1 degree to the left, the cursor displayed in the display device may move to the left as much as the corresponding coordinate in (1) of Figure 8. The coordinate variation of the display device screen corresponding to the movement angle of the input device may be measured in advance, and may be stored in the input device or in the display device.

The reference position of the input device may be variously determined.

Referring to (2) of Figure 8, the minor direction of the input device is located in the horizontal direction with respect to the screen of the display device. For convenience, the angle displayed in (2) of Figure 8 is displayed based on the input device illustrated in (1) of Figure 8.

The user locates the input device, as illustrated in (2) of Figure 8, and inputs a reference determined command. The input device or the display device determines the current location of the input device as the reference position, according to the reference determined command. In other words, the location of the input device arranged at an angle of 90 degrees may be determined as the reference position, and the cursor may be displayed in the center of the display device screen. The 30 degrees to the left and to the right direction of the input device may be determined as the maximum display region of the display device. In other words, the angle between 60 degrees and 120 degrees of the input device may become an angle where the cursor is displayed on the display device.

The input device may determine the reference position by calculating the absolute angle sensed in the sensor 120, and the angle at the time of inputting the reference position determined command of a user. Alternatively, the input device may determine the reference position in the display device by transmitting the absolute angle and the angle information at the time of inputting the reference position determined command.

Left and right positions are described in Figure 8, and the reference position on up-and-down positions may also be determined in the same way.

The cursor movement and the application selection use the input device in a described way. In addition, the display location of the cursor may change automatically, depending on the type of application.

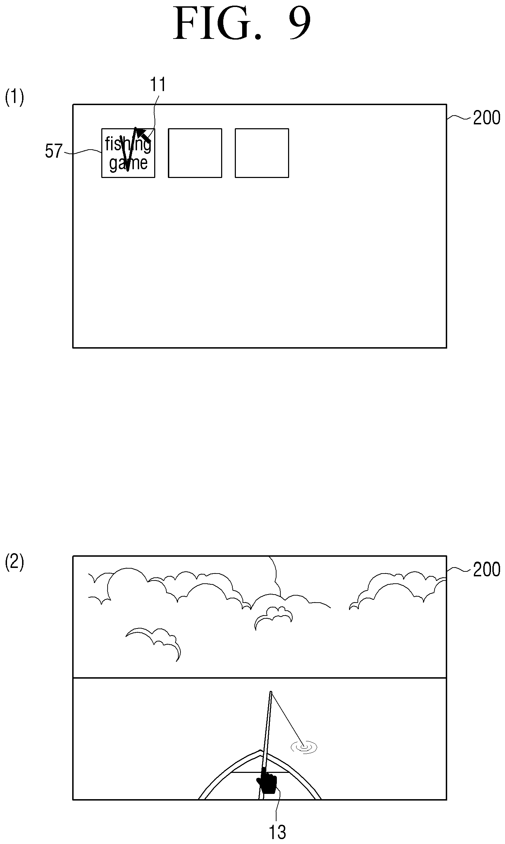

Figure 9 is a view for explaining an application execution operation according to a preferred embodiment.

According to (1) of Figure 9, a cursor 11 moves in response to the movement of the input device. The display device displays a plurality of applications on the screen, including a fishing game application 57. The user moves the input device to locate the cursor on the fishing game application, and executes the operation of moving downward to upward. The operation of moving the input device downward and upward over a predetermined threshold value may be determined as an application selection command. The threshold value may be variously determined, e.g., for a preferred embodiment, the size of the angular speed may be determined as -5 deg/s.

If the user moves the input device downward to upward below the threshold value, the selection command is not executed, but the cursor is moved in response. Alternatively, the operation is executed on a wallpaper rather than an application, or no operation may be executed.

If the operation is executed on the fishing game application 57, the application is selected and executed.

According to (2) of Figure 9, the display device executes the fishing game application 57. A cursor 11 is located on the left top of the screen of the display device in (1) of Figure 9. Though there is no movement of the input device illustrated in (1) of Figure 9, a cursor 13 may be displayed in an appropriate location, depending on the type of an application. In addition, the shape of the arrow shaped cursor 11 may be changed to the shape of the hand shaped cursor 13. In addition, the size of the angular speed may be changed, and determined as 3 deg/s, in response to a command of lifting a fishing rod.

The method of moving a cursor displayed on the display device, and selecting an application by using a gesture of the input device is described. In the following, a flow diagram of a control method of the input device and the display device is described.

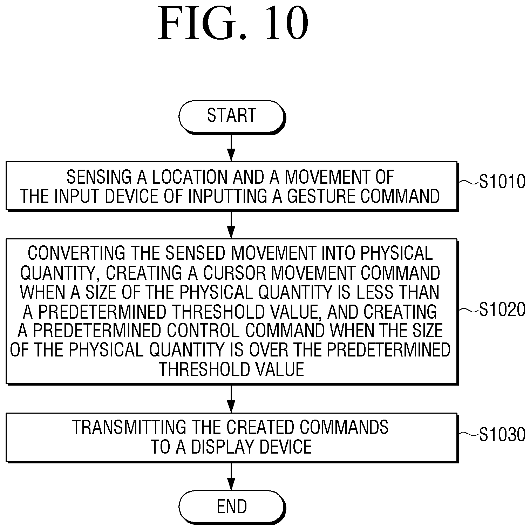

Figure 10 is a flow diagram for explaining a control method of an input device according to a preferred embodiment.

Referring to Figure 10, the input device senses the location and the movement (S1010). The location and the movement are sensed by at least one among an accelerometer, a gyroscope, and a magnetometer included in the sensor of the input device.

The input device converts the sensed movement into a physical quantity, and creates a cursor movement command when the size of the physical quantity is less than a predetermined threshold value, and creates a predetermined control command when the size of the physical quantity is over a predetermined threshold value (S1020). The predetermined threshold value signifies a determination value for recognizing that the operation corresponding to a specified command is executed. The threshold value may be individually determined, depending on the type of executing application. The physical quantity signifies the angular speed, the speed, the acceleration, and the distance of movement of the input device.

The creation of the control command may include a reception of sensor measurement value, a preprocessing execution, pose estimation, a movement distinction, a calibration execution, a user intention analysis, a gain function application, and a gesture recognition process. Specific methods are described above, so the methods will not be repeated.

The input device transmits the created command to the display device (S1030). The input device creates a control signal within the input device when executing a calculation process using the physical quantity. The created control signal is transmitted to the display device. The calculation process, creating a control signal, may also be executed in the display device. In this case, the input device may transmit the sensed motion signal to the display device.

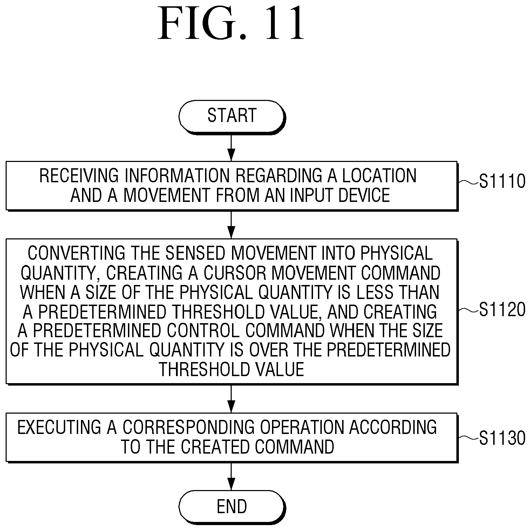

Figure 11 is a flow diagram for explaining a control method of a display device according to a preferred embodiment.

According to Figure 11, the display device receives information on the location and the movement from the input device (S1110). When the calculation process creating a control signal is executed in the display device, the display device receives a motion signal from the input device.

The display device converts the information on the received movement into the physical quantity, and creates a cursor movement command when the size of the physical quantity is less than a predetermined threshold value, and creates a predetermined control command when the size of the physical quantity is over a predetermined threshold value (S1120). The control command creation process is described in Figure 10.

The display device executes the operation corresponding to the created command (S1130). The display device executes the operation by moving a cursor, or selecting an application. In addition, the display device may transmit the necessary data or information to the input device.

The control methods of the input device and the display device according to the various embodiments may be realized as a program, and be provided to the display device.

As a preferred embodiment, the non-transitory computer readable medium in which a program executing a step of sensing the location and the movement of the input device, a step of converting the sensed movement into the physical quantity and creating a cursor movement command when the size of the physical quantity is less than a predetermined threshold value, or creating a predetermined control command when the size of the physical quantity is over a predetermined threshold value, and a step of transmitting the created command to the display device is stored may be provided.

Alternatively, the non-transitory computer readable medium in which a program executing a step of receiving the information on the location and the movement from the input device, a step of converting the information on the received movement into the physical quantity and creating a cursor movement command when the size of the physical quantity is less than a predetermined threshold value, or creating a predetermined control command when the size of the physical quantity is over a predetermined threshold value, and a step of executing the operation corresponding to the created command is stored may be provided.

The non-transitory computer readable medium is a medium storing data semi-permanently, not a medium storing data for brief moment such as a register, cash, or a memory, etc., and also a medium which is readable by a gadget. Specifically, various applications and programs described above may be provided by being stored in the non-transitory computer readable medium, such as a CD, a DVD, a hard disk, a Bluray disk, an USB, a memory card, and a ROM, etc. Although exemplary aspects have been described for illustrative purposes, those skilled in the art will appreciate that various modifications, additions and substitutions are possible, without departing from essential characteristics of the disclosure.

Therefore, exemplary aspects of the present disclosure have not been described for limiting purposes. Accordingly, the scope of the disclosure is not to be limited by the above aspects but by the claims.

## Claims

1. An input device (100) comprising:
a sensor (120) for sensing a location and a movement of the input device of inputting a gesture command;
a controller (130) for converting the sensed movement into physical quantity, and creating a predetermined control command when a size of the physical quantity is over a predetermined threshold value; and
a communication unit (110) for transmitting the created command to a display device (200);
**characterised in that**:
the controller is configured to create a cursor movement command when the size of the physical quantity is less than the predetermined threshold value

2. The input device (100) according to claim 1, further comprising an inputter (140) for receiving a reference determination command; and the controller (130) determines a reference position for a position of the input device at the time of inputting the reference determination command when the reference determination command is inputted, and discriminating a movement of the input device based on the determined reference position.

3. The input device (100) according to claim 1 or 2, wherein the predetermined threshold value is individually determined depending on a type of executing applications.

4. The input device (100) according to any one of claims 1 to 3, wherein the controller displays the cursor a predetermined default region in a changed screen, when the screen of the display device is changed according to the control command.

5. A display device (200) comprising:
a communication unit (210) for receiving information regarding a location and a movement from an input device (100);
a controller (220) for converting a sensed movement into physical quantity, and creating a predetermined control command when a size of the physical quantity is over a predetermined threshold value; and
an outputter (230) for executing a corresponding operation according to the created command;
charaterised in that:
the controller is configured to create a cursor movement command when the size of the physical quantity is less than the predetermined threshold value

6. The display device (200) according to claim 5, wherein the communication unit (210) receives a reference determination command; and
the controller (220) determines a reference position for a position of the input device at the time of inputting the reference determination command when the reference determination command is inputted, and discriminating a movement of the input device based on the determined reference position.

7. The display device (200) according to claim 5 or 6, wherein the predetermined threshold value is individually determined depending on a type of executing applications.

8. The display device (200) according to any one of claims 5 to 7, wherein the controller (220) displays the cursor a predetermined default region in a changed screen, when the screen of the display device is changed according to the control command.

9. A method of controlling an input device (100) comprising:
sensing a location and a movement of the input device of inputting a gesture command;
converting the sensed movement into physical quantity, and creating a predetermined control command when a size of the physical quantity is over a predetermined threshold value; and
transmitting the created command to a display device (200);
**characterised by**:
creating a cursor movement command when the size of the physical quantity is less than the predetermined threshold value

10. The method of controlling the input device (100) according to claim 9, further comprising:
receiving a reference determination command; and
determining a reference position for a position of the input device at the time of inputting the reference determination command when the reference determination command is inputted.

11. The method of controlling the input device (100) according to claim 9 or 10, wherein the predetermined threshold value is individually determined depending on a type of executing applications.

12. The method of controlling the input device (100) according to any one of claims 9 to 11, further comprising a step of displaying the cursor a predetermined default region in a changed screen, when the screen of the display device (202) is changed according to the control command.

13. A method of controlling a display device (200) comprising:
receiving information regarding a location and a movement from an input device (100);
converting a sensed movement into physical quantity, and creating a predetermined control command when a size of the physical quantity is over a predetermined threshold value; and
executing a corresponding operation according to the created command;
**characterised by**:
creating a cursor movement command when the size of the physical quantity is less than the predetermined threshold value

14. The method of controlling the display device (200) according to claim 13, further comprising:
receiving a reference determination command; and
determining a reference position for a position of the input device (100) at the time of inputting the reference determination command when the reference determination command is inputted.

15. The method of controlling the display device (200) according to claim 13 or 14, wherein the predetermined threshold value is individually determined depending on a type of executing applications.

## Patentansprüche

1. Eingabevorrichtung (100), umfassend:
einen Sensor (120) zum Erfassen eines Standorts und einer Bewegung der Eingabevorrichtung bei der Eingabe eines Gestenbefehls;
eine Steuerung (130) zum Umwandeln der erfassten Bewegung in eine physikalische Größe und zum Erzeugen eines vorbestimmten Steuerbefehls, wenn eine Größe der physikalischen Größe über einem vorbestimmten Schwellenwert liegt; und
eine Kommunikationseinheit (110) zum Übertragen des erzeugten Befehls an eine Anzeigevorrichtung (200);
**dadurch gekennzeichnet, dass**:
die Steuerung konfiguriert ist, um einen Cursorbewegungsbefehl zu erzeugen, wenn die Größe der physikalischen Größe kleiner als der vorbestimmte Schwellenwert ist.

2. Eingabevorrichtung (100) nach Anspruch 1, ferner umfassend eine Eingangsvorrichtung (140) zum Empfangen eines Referenzbestimmungsbefehls; und Bestimmen durch die Steuerung (130) einer Referenzposition für eine Position der Eingabevorrichtung zum Zeitpunkt des Eingebens des Referenzbestimmungsbefehls, wenn der Referenzbestimmungsbefehl eingegeben wird, und Unterscheiden einer Bewegung der Eingabevorrichtung basierend auf der ermittelten Referenzposition.

3. Eingabevorrichtung (100) nach Anspruch 1 oder 2, wobei der vorbestimmte Schwellenwert abhängig von einer Ausführungsart von Anwendungen individuell bestimmt wird.

4. Eingabevorrichtung (100) nach einem der Ansprüche 1 bis 3, wobei die Steuerung den Cursor in einem vorgegebenen Standardbereich in einem geänderten Bildschirm anzeigt, wenn der Bildschirm der Anzeigevorrichtung gemäß dem Steuerbefehl geändert wird.

5. Anzeigevorrichtung (200), umfassend:
eine Kommunikationseinheit (210) zum Empfangen von Informationen mit Bezug auf einen Standort und eine Bewegung von einer Eingabevorrichtung (100);
eine Steuerung (220) zum Umwandeln einer erfassten Bewegung in eine physikalische Größe und zum Erzeugen eines vorbestimmten Steuerbefehls, wenn eine Größe der physikalischen Größe über einem vorbestimmten Schwellenwert liegt; und
eine Ausgangsvorrichtung (230) zum Ausführen eines entsprechenden Vorgangs gemäß dem erzeugten Befehl;
**dadurch gekennzeichnet, dass**:
die Steuerung konfiguriert ist, um einen Cursorbewegungsbefehl zu erzeugen, wenn die Größe der physikalischen Größe kleiner als der vorbestimmte Schwellenwert ist.

6. Anzeigevorrichtung (200) nach Anspruch 5, wobei die Kommunikationseinheit (210) einen Referenzbestimmungsbefehl empfängt; und
die Steuerung (220) eine Referenzposition für eine Position der Eingabevorrichtung zum Zeitpunkt des Eingebens des Referenzbestimmungsbefehls bestimmt, wenn der Referenzbestimmungsbefehl eingegeben wird, und eine Bewegung der Eingabevorrichtung basierend auf der ermittelten Referenzposition unterscheidet.

7. Anzeigevorrichtung (200) nach Anspruch 5 oder 6, wobei der vorbestimmte Schwellenwert abhängig von einer Ausführungsart von Anwendungen individuell bestimmt wird.

8. Anzeigevorrichtung (200) nach einem der Ansprüche 5 bis 7, wobei die Steuerung (220) den Cursor in einem vorgegebenen Standardbereich in einem geänderten Bildschirm anzeigt, wenn der Bildschirm der Anzeigevorrichtung gemäß dem Steuerbefehl geändert wird.

9. Verfahren zum Steuern einer Eingabevorrichtung (100), umfassend:
Erfassen eines Standorts und einer Bewegung der Eingabevorrichtung bei der Eingabe eines Gestenbefehls; Umwandlung der erfassten Bewegung in eine physikalische Größe und Erzeugen eines vorbestimmten Steuerbefehls, wenn eine Größe der physikalischen Größe über einem vorbestimmten Schwellenwert liegt; und
Übertragen des erzeugten Befehls an eine Anzeigevorrichtung (200);
durch Folgendes gekennzeichnet:
Erzeugen eines Cursorbewegungsbefehls, wenn die Größe der physikalischen Größe kleiner als der vorbestimmte Schwellenwert ist.

10. Verfahren zum Steuern der Eingabevorrichtung (100) nach Anspruch 9, ferner umfassend:
Empfangen eines Referenzbestimmungsbefehls; und
Bestimmen einer Referenzposition für eine Position der Eingabevorrichtung zum Zeitpunkt des Eingebens des Referenzbestimmungsbefehls, wenn der Referenzbestimmungsbefehl eingegeben wird.

11. Verfahren zum Steuern der Eingabevorrichtung (100) nach Anspruch 9 oder 10, wobei der vorbestimmte Schwellenwert abhängig von einer Ausführungsart von Anwendungen individuell bestimmt wird.

12. Verfahren zum Steuern der Eingabevorrichtung (100) nach einem der Ansprüche 9 bis 11, ferner umfassend den Schritt des Anzeigens des Cursors in einem vorgegebenen Standardbereich in einem geänderten Bildschirm, wenn der Bildschirm der Anzeigevorrichtung (202) gemäß dem Steuerbefehl geändert wird.

13. Verfahren zum Steuern einer Anzeigevorrichtung (200), umfassend:
Empfangen von Informationen bezüglich eines Standorts und einer Bewegung von einer Eingabevorrichtung (100);
Umwandeln einer erfassten Bewegung in eine physikalische Größe und Erzeugen eines vorbestimmten Steuerbefehls, wenn eine Größe der physikalischen Größe über einem vorbestimmten Schwellenwert liegt; und
Ausführen eines entsprechenden Vorgangs gemäß dem erzeugten Befehl;
durch Folgendes gekennzeichnet:
Erzeugen eines Cursorbewegungsbefehls, wenn die Größe der physikalischen Größe kleiner als der vorbestimmte Schwellenwert ist.

14. Verfahren zum Steuern der Anzeigevorrichtung (200) nach Anspruch 13, ferner umfassend:
Empfangen eines Referenzbestimmungsbefehls; und
Bestimmen einer Referenzposition für eine Position der Eingabevorrichtung (100) zum Zeitpunkt des Eingebens des Referenzbestimmungsbefehls, wenn der Referenzbestimmungsbefehl eingegeben wird.

15. Verfahren zum Steuern der Anzeigevorrichtung (200) nach Anspruch 13 oder 14, wobei der vorbestimmte Schwellenwert abhängig von einer Ausführungsart von Anwendungen individuell bestimmt wird.

## Revendications

1. Dispositif de saisie (100) comprenant :
un capteur (120) pour détecter une localisation et un mouvement du dispositif de saisie relativement à la saisie d'une instruction gestuelle ;
un contrôleur (130) pour convertir le mouvement détecté en une quantité physique, et créer une instruction de commande prédéterminée lorsqu'une taille de la quantité physique est supérieure à une valeur seuil prédéterminée ; et
une unité de communication (110) pour transmettre l'instruction créée à un dispositif d'affichage (200) ;
caractérisé en ce qui :
le contrôleur est configuré pour créer une instruction de mouvement de curseur lorsque la taille de la quantité physique est inférieure à la valeur seuil prédéterminée.

2. Dispositif de saisie (100) selon la revendication 1, comprenant en outre un module d'entrée (140) pour recevoir une instruction de détermination de référence ; et le contrôleur (130) détermine une position de référence pour une position du dispositif de saisie au moment de la saisie de l'instruction de détermination de référence lorsque l'instruction de détermination de référence est saisie, et distingue un mouvement du dispositif de saisie en fonction de la position de référence déterminée.

3. Dispositif de saisie (100) selon la revendication 1 ou 2, dans lequel la valeur seuil prédéterminée est déterminée individuellement en fonction d'un type d'applications exécutées.

4. Dispositif de saisie (100) selon l'une quelconque des revendications 1 à 3, dans lequel le contrôleur affiche le curseur sur une région par défaut prédéterminée sur un écran modifié, lorsque l'écran du dispositif d'affichage est modifié selon l'instruction de commande.

5. Dispositif d'affichage (200) comprenant :
une unité de communication (210) pour recevoir des informations concernant une localisation et un mouvement en provenance d'un dispositif de saisie (100) ;
un contrôleur (220) pour convertir un mouvement détecté en une quantité physique, et créer une instruction de commande prédéterminée lorsqu'une taille de la quantité physique est supérieure à une valeur seuil prédéterminée ; et
un module de sortie (230) pour exécuter une opération correspondante en fonction de l'instruction crée ;
**caractérisé en ce que** :
le contrôleur est configuré pour créer une instruction de mouvement de curseur lorsque la taille de la quantité physique est inférieure à la valeur seuil prédéterminée.

6. Dispositif d'affichage (200) selon la revendication 5, dans lequel l'unité de communication (210) reçoit une instruction de détermination de référence ; et
le contrôleur (220) détermine une position de référence pour une position du dispositif de saisie au moment de la saisie de l'instruction de détermination de référence lorsque l'instruction de détermination de référence est saisie, et discrimine un mouvement du dispositif de saisie en fonction de la position de référence déterminée.

7. Dispositif d'affichage (200) selon la revendication 5 ou 6, dans lequel la valeur seuil prédéterminée est déterminée individuellement en fonction d'un type d'applications exécutées.

8. Dispositif d'affichage (200) selon l'une quelconque des revendications 5 à 7, dans lequel le contrôleur (220) affiche le curseur sur une région par défaut prédéterminée sur un écran modifié, lorsque l'écran du dispositif d'affichage est modifié selon l'instruction de commande.

9. Procédé de commande d'un dispositif de saisie (100), comprenant :
la détection d'une localisation et d'un mouvement du dispositif de saisie relativement à la saisie d'une instruction gestuelle ;
la conversion du mouvement détecté en une quantité physique, et la création d'une instruction de commande prédéterminée lorsqu'une taille de la quantité physique est supérieure à une valeur seuil prédéterminée ; et
la transmission de l'instruction créée à un dispositif d'affichage (200) ;
**caractérisé par** :
la création d'une instruction de mouvement de curseur lorsque la taille de la quantité physique est inférieure à la valeur seuil prédéterminée.

10. Procédé de commande du dispositif de saisie (100) selon la revendication 9, comprenant en outre :
la réception d'une instruction de détermination de référence ; et
la détermination d'une position de référence pour une position du dispositif de saisie au moment de la saisie de l'instruction de détermination de référence lorsque l'instruction de détermination de référence est saisie.

11. Procédé de commande du dispositif de saisie (100) selon la revendication 9 ou 10, dans lequel la valeur de seuil prédéterminée est déterminée individuellement en fonction d'un type d'applications exécutées.

12. Procédé de commande du dispositif de saisie (100) selon l'une quelconque des revendications 9 à 11, comprenant en outre une étape d'affichage du curseur sur une région par défaut prédéterminée sur un écran modifié, lorsque l'écran du dispositif d'affichage (202) est modifié selon l'instruction de commande.

13. Procédé de commande d'un dispositif d'affichage (200) comprenant :
la réception d'informations concernant une localisation et un mouvement en provenance d'un dispositif de saisie (100) ;
la conversion d'un mouvement détecté en une quantité physique, et la création d'une instruction de commande prédéterminée lorsqu'une taille de la quantité physique est supérieure à une valeur seuil prédéterminée ; et
l'exécution d'une opération correspondante en fonction de l'instruction crée ;
**caractérisé par** :
la création d'une instruction de mouvement de curseur lorsque la taille de la quantité physique est inférieure à la valeur seuil prédéterminée.

14. Procédé de commande du dispositif d'affichage (200) selon la revendication 13, comprenant en outre :
la réception d'une instruction de détermination de référence ; et
la détermination d'une position de référence pour une position du dispositif de saisie (100) au moment de la saisie de l'instruction de détermination de référence lorsque l'instruction de détermination de référence est saisie.

15. Procédé de commande du dispositif d'affichage (200) selon la revendication 13 ou 14, dans lequel la valeur seuil prédéterminée est déterminée individuellement en fonction d'un type d'applications exécutées.
